**Europäisches Patentamt**

**European Patent Office**

**Office européen des brevets**

(19)

(11) Veröffentlichungsnummer : **0 424 760 B1**

(12)

# EUROPÄISCHE PATENTSCHRIFT

(45) Veröffentlichungstag der Patentschrift :
**02.12.92 Patentblatt 92/49**

(51) Int. Cl.$^5$ : **B60J 5/04**

(21) Anmeldenummer : **90119657.6**

(22) Anmeldetag : **13.10.90**

(54) **Kraftfahrzeugtür.**

(30) Priorität : **27.10.89 DE 3935857**

(43) Veröffentlichungstag der Anmeldung :
**02.05.91 Patentblatt 91/18**

(45) Bekanntmachung des Hinweises auf die
Patenterteilung :
**02.12.92 Patentblatt 92/49**

(84) Benannte Vertragsstaaten :
**BE DE ES FR GB IT NL SE**

(56) Entgegenhaltungen :
**DE-A- 3 608 506**
**GB-A- 2 136 863**

(73) Patentinhaber : **BAYER AG**
**W-5090 Leverkusen 1 Bayerwerk (DE)**

(72) Erfinder : **Goldbach, Hubert**
**Grevenhauser Weg 33**
**W-4030 Ratingen 8 (DE)**
Erfinder : **Koch, Boris**
**Rosenweg 29**
**W-5632 Wermelskirchen 3 (DE)**

EP 0 424 760 B1

## Beschreibung

Die Erfindung betrifft eine Kraftfahrzeugtür, bestehend aus einem Grundkörper, einer Abdeckung zum Fahrgastraum und einem außenseitigen Türblatt, das mit dem Grundkörper bzw. der Abdeckung verbunden ist

Man ist heute bemüht, Kraftfahrzeugtüren zumindest überwiegend aus Kunststoff herzustellen und dabei ein außenseitiges, leicht austauschbares Türblatt vorzusehen, weil dieses Türblatt erfahrungsgemäß am häufigsten Beschädigungen ausgesetzt ist und ausgetauscht werden muß. Bei den bisherigen Stahlblechkonstruktionen war das Türblatt nicht lösbar und es mußte meist die gesamte Tür ausgetauscht werden, wenn eine Reparatur des Türblattes nicht mehr möglich war oder von den Lohnkosten her nicht lohnte.

Gemäß einem internen Stand der Technik hat man eine solche Tür aus einem Grundkörper und einem darauf durch Verschraubung gehaltenen Türblatt aufgebaut, wobei der Grundkörper zum Fahrgastraum hin mit einer Abdeckung versehen ist. Gemäß einer Variante umhüllt die Abdeckung den Grundkörper auch an dessen Umfang, so daß das Türblatt direkt mit der Abdeckung verbunden ist.

Es hat sich gezeigt, daß das Türblatt bei starrer Verbindung mit dem Grundkörper bzw. mit der Abdeckung Verformungen durch unterschiedliche Wärmedehnung gegenüber Grundkörper bzw. Abdeckung unterworfen ist. Außerdem ist eine Schraubverbindung sehr aufwendig, weil Verstärkungen für die Schraubenlöcher am Türblatt vorgesehen werden müssen. Dies führt bei thermoplastischen Kunststoffteilen vielfach zu Einfallstellen an der zu lackierenden Oberfläche. Schließlich ist es auch noch wünschenswert, daß die Verbindung staubdicht ist.

Es besteht die Aufgabe, eine Kraftfahrzeugtür der eingangs genannten Art zu schaffen, bei welcher das Türblatt leicht montierbar bzw. austauschbar ist, die Verbindung von Türblatt und Grundkörper bzw. innerer Abdeckung Wärmedehnungen ausgleicht und zudem abdichtet.

Gelöst wird diese Aufgabe dadurch, daß die Umfangsränder von Türblatt und Grundkörper bzw. Abdeckung miteinander lösbare Verbindungen aufweisen, wobei mindestens ein korrespondierendes Ränderpaar in der Türebene bzw. parallel dazu gelegene und zueinander öffnende Nuten aufweist und wobei in die Nuten ein verbindender und abdichtender, zähelastischer, Wärmedehnungsunterschiede kompensierender Profilstreifen eingreift.

Aus DE-A-3 608 506 ist es zwar bekannt, einen Elastomer-Profilstreifen in einer Nut des Grundkörpers anzuordnen. Er stellt in dieser Anwendung aber nur einen lagefixierenden Reibschluß für eine Klemmverschraubung dar und kompensiert nicht, wie bei der vorliegenden Erfindung, Wärmedehnungsunterschiede bei Formschluß mit Grundkörper und Außenblatt.

Je nach Geometrie und Konstruktion der Tür kann es erforderlich sein, daß mehrere Umfangsseiten mit der neuartigen Verbindung auszustatten sind. Im einfachsten Falle jedoch lassen sich zwei Umfangsseiten des Türblattes mit einem eine Nut bildenden, hakenartigen Profil versehen, in welches der überstehende umlaufende Rand des Grundkörpers bzw. der Abdeckung eingreift. Der dritte oder gegebenenfalls vierte Rand von Türblatt und Grundkörper bzw. Abdeckung ist dann gemäß der neuartigen Verbindung gestaltet. Auf diese Weise läßt sich das Türblatt, erforderlichenfalls unter elastischer Verformung, auf die Ränder des Grundkörpers bzw. der Abdeckung aufschieben und durch Einbringen des Profilstreifens in die hakenartig gestalteten Ränder von Türblatt und Grundkörper bzw. Abdeckung läßt sich die Montage beenden. Bei allseitiger Verwendung der neuen Verbindung läßt sich das Türblatt senkrecht (unidirektional) auf den Grundkörper montieren. Der Profilstreifen ist in seiner Breite so dimensioniert, das er die Kontraktion des Türblattes bei Abkühlung aufnimmt. Die Dicke ist so gewählt, daß er weitgehend spielfrei in den Nuten sitzt. Die Lage des Türblattes ist durch eine an der Unterkante mittige Zentrierung und durch formschlüssige Anlagen an der Oberkante fixiert. Durch den kleinen Abstand der Nuten zueinander wird der Profilstreifen im wesentlichen auf Scherung beansprucht. Die Ausdehnung des Türblattes ist in Längsrichtung unbehindert. Der Profilstreifen muß einerseits genügend steif sein, um diese Aufgabe zu erfüllen, aber andererseits elastisch genug, um abzudichten, Geräusche zu vermeiden und sich der Kontur des Türblattes und des Grundkörpers bzw. der Abdeckung anzupassen. Als Material für die Profilstreifen eignen sich insbesondere ein Polyurethan oder ein anderes Kunststoffelastomer mit einer Härte im Bereich von 60 bis 80 Shore D (gemessen nach DIN 53 505). Für das Einziehen des Profilstreifens läßt sich ein Handgerät verwenden, welches aus einem Handgriff mit einem entsprechend langen Draht, welcher am Ende einen Haken aufweist, besteht. Dieser Vorgang läßt sich automatisieren, indem man den Profilstreifen von einer Rolle der Montagestation zuführt und über den Greifer eines Roboters in das zu verbindende Ränderpaar einzieht.

Gemäß einer besonderen Ausführungsform weist der Profilstreifen Z-förmigen Querschnitt auf und Türblatt und Grundkörper bzw. Abdeckung besitzen dementsprechend Abstand voneinander.

Dadurch, daß durch die Z-Form das Türblatt an dieser Stelle vom Rand des Grundkörpers bzw. der Abdeckung ferngehalten wird, werden Klappergeräusche vermieden.

Gemäß einer weiteren Variante weist der Profilstreifen eine zwischen den Rändern austretende, gegen den Türrahmen der Karosserie abdichtende Dichtlippe auf.

Auf diese Weise läßt sich die Abdichtung des Fahrgastraumes so weit wie möglich nach außen verlegen.

Gemäß einer weiteren besonderen Ausführungsform weist der Profilstreifen eine den Schenkel des Randes des Türblattes abdichtend überlappende Dichtlippe auf. Sie kann auch zum Grundkörper hin vorgesehen sein.

Durch diese Maßnahme wird eine erhöhte Abdichtwirkung erreicht.

In der Zeichnung ist die neue Kraftfahrzeugtür in einem Ausführungsbeispiel rein schematisch dargestellt und nachstehend näher erläutert. Es zeigen:

Fig. 1 einen Schnitt durch Tür und Türrahmen im Abriß,

Fig. 2 einen Schnitt durch eine abgewandelte Verbindung,

Fig. 3 einen Schnitt durch eine weitere abgewandelte Verbindung und

Fig. 4 einen Profilstreifen in der Draufsicht.

Alles, was nicht unmittelbar mit der neuartigen Ausführungsform der Tür zu tun hat, wie Fenster, Fensterhebelmechanismus, Schloß, Türgriffe, Scharniere und dergleichen, sind weggelassen worden.

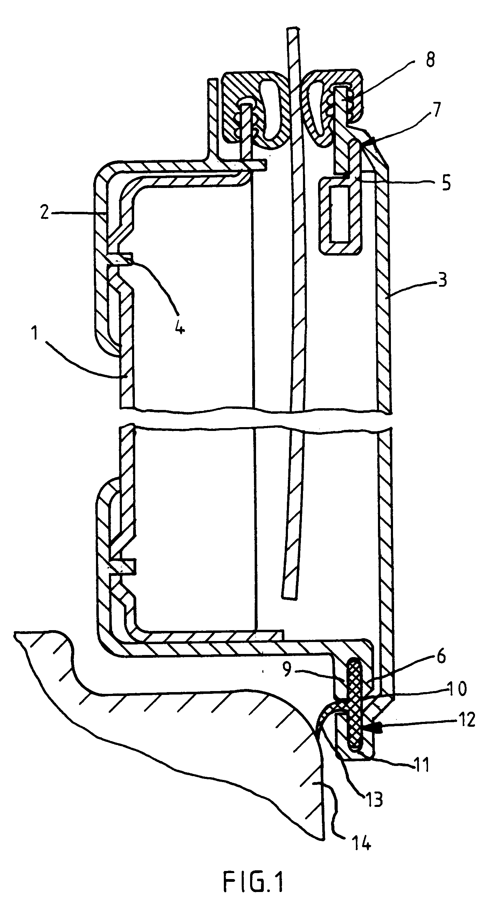

In Fig. 1 besteht die Kraftfahrzeugtür aus einem Grundkörper 1 mit einer Kunststoff-Metall-Struktur, welcher zum Fahrgastraum hin eine Abdeckung 2 aus Kunststoff und außenseitig ein Türblatt 3 aus Kunststoff aufweist. Die Abdeckung 2 ist mittels Druckstiften 4 am Grundkörper 1 verschiebbar befestigt. Die Abdeckung 2 und der Grundkörper 1 weisen umlaufende Ränder 5, 6 auf, wobei der obere Rand 5 und der vordere, nicht dargestellte Rand gleichartig gestaltet sind. Diese Ränder 5 greifen in Nuten 7 ein, welche im oberen Rand 8 und im vorderen nicht dargestellten Rand des Türblattes 3 angeordnet sind. Der untere Rand 6 sowie der hintere, ebenfalls nicht dargestellte Rand, weisen jeweils eine Nut 9 auf, in welche jeweils ein Profilstreifen 10 aus zähelastischem Polyurethanelastomer eingreift. Der untere Rand 11 sowie der nicht dargestellte hintere Rand des Türblattes 3 sind mit einer zur Nut 9 weisenden Nut 12 versehen, in welche die zweite Längskante des Profilstreifens 10 eingreift. Der Profilstreifen 10 sitzt weitgehend spielfrei in den Nuten 9, 12. Durch den geringen Abstand der Nuten 9, 12 wird der Profilstreifen 10 im wesentlichen auf Scherung beansprucht, so daß eine Bewegung zwischen Türblatt 3 und Abdeckung 2 verhindert wird. Die elastische Zähigkeit des Profilstreifens 10 und seine Abmessungen sind derart, das unterschiedliche Wärmedehnungen von Abdeckung 2 und Türblatt 3 kompensiert werden, ohne das sich die Verbindung lockert oder überbeansprucht wird. Außerdem wird gegen Eindringen von Feuchtigkeit abgedichtet. Zwischen den Rändern 6 und 11 tritt nach innen zu eine Dichtungslippe 13 des Profilstreifens 10 aus, um gegen die Karosserie, welche an dieser Stelle durch einen Türschweller 14 gebildet ist, abzudichten.

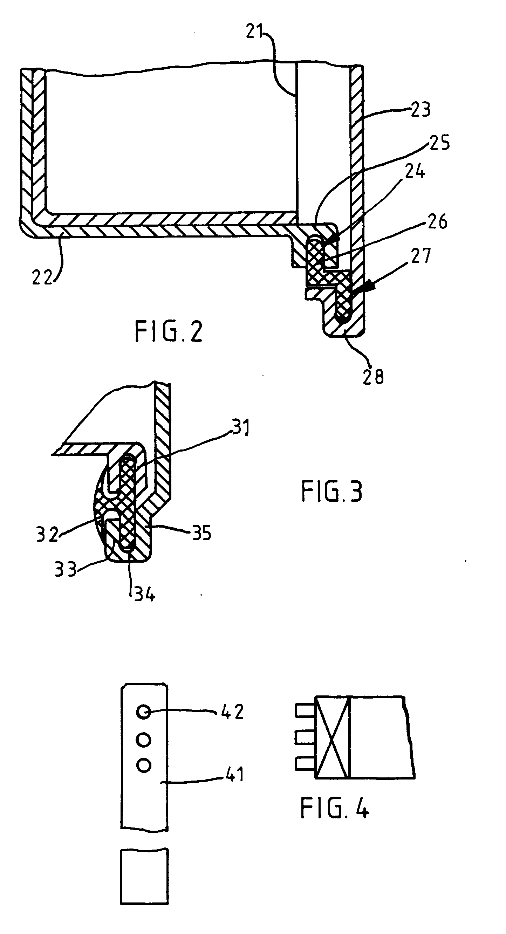

In Fig. 2 umgreift die innere Abdeckung 22 den Grundkörper 21. Das Türblatt ist mit 23 bezeichnet. Hier weist die Abdeckung 22 einen eine Nut 24 bildenden Rand 25 auf, wobei in die Nut 24 ein Z-förmig gestalteter Profilstreifen 26 eingreift. Dessen zweite Längskante rastet in eine Nut 27 des Randes 28 des Türblattes 23 ein. Durch die Z-förmige Gestaltung des Profilstreifens 26 besitzt das Türblatt Abstand vom Rand 25, so daß Klappergeräusche vermieden werden.

In Fig. 3 ist der Profilstreifen 31 mit einer Dichtlippe 32 versehen, welche den abgewinkelten Schenkel 33 des Randes 34 des Türblattes 35 abdichtend überlappt.

In Fig. 4 besitzt der Profilstreifen 41 ein Loch 42. In dieses kann man mit dem Haken einer Einziehvorrichtung eingreifen, wie sie bereits beispielsweise beschrieben wurde.

## Patentansprüche

1. Kraftfahrzeugtür, bestehend aus einem Grundkörper (1, 21), einer Abdeckung (2, 22) zum Fahrgastraum und aus einem außenseitigen Türblatt (3, 23, 35), das mit dem Grundkörper (1, 21) bzw. der Abdeckung (2, 22) verbunden ist, dadurch gekennzeichnet, daß die Umfangsränder (8; 11, 28, 34) von Türblatt (3, 23, 35) und Grundkörper (1, 21) bzw. Abdeckung (2, 22) miteinander lösbare Verbindungen aufweisen, wobei mindestens ein korrespondierendes Ränderpaar (6; 11, 25; 28) in der Türebene bzw. parallel dazu gelegene und zueinander öffnende Nuten (9; 12, 24; 27) aufweist, und wobei in diese Nuten (9; 12, 24; 27) ein verbindender und abdichtender, zähelastischer, Wärmedehnungsunterschiede kompensierender Profilstreifen (10, 26, 31, 41) eingreift.

2. Kraftfahrzeugtür nach Anspruch 1, dadurch gekennzeichnet, daß der Profilstreifen (26) Z-förmigen Querschnitt aufweist und Türblatt (23) und Grundkörper (21) bzw. Abdeckung (22) dementsprechend Abstand voneinander besitzen.

3. Kraftfahrzeugtür nach Anspruch 1 oder 2, dadurch gekennzeichnet, daß der Profilstreifen (10) eine zwischen den Rändern (6; 11) austretende, gegen den Türrahmen (14) der Karosserie abdichtende Dichtlippe (13) aufweist.

4. Kraftfahrzeugtür nach Anspruch 1, 2 oder 3, dadurch gekennzeichnet, daß dar Profilstreifen (31) eine den Schenkel (33) des Randes (34) des Türblattes (35) abdichtend überlappende Dichtlippe (32) aufweist.

**Claims**

1. A motor vehicle door comprising a base element (1, 21), a cover (2, 22) facing the passenger compartment and an external door leaf (3, 23, 35) connected with the base element (1, 21) or cover (2, 22), characterised in that the circumferential edges (8; 11, 28, 34) of the door leaf (3, 23, 35) and the base element (1, 21) or cover (2, 22) comprise connections releasable from one another, at least one corresponding edge pair (6; 11, 25; 28) comprising grooves (9; 12, 24; 27) arranged in the door plane or parallel thereto and opening towards one another, and a connecting and sealing, tough-elastic profile strip (10, 26, 31, 41) compensating thermal expansion differences engaging in said grooves (9; 12, 24; 27).

2. A motor vehicle door according to claim 1, characterised in that the profile strip (26) has a Z-shaped cross section and the door leaf (23) and base element (21) or cover (22) are arranged at a corresponding distance apart.

3. A motor vehicle door according to claim 1 or 2, characterised in that the profile strip (10) comprises a sealing lip (13) emerging from between the edges (6; 11) and sealing relative to the door frame (14) of the vehicle body.

4. A motor vehicle door according to claim 1, 2 or 3, characterised in that the profile strip (31) comprises a sealing lip (32) overlapping the limb (33) of the edge (34) of the door leaf (35) in a sealing-tight manner.

**Revendications**

1. Porte de véhicule automobile, composée d'un corps principal (1, 21), d'un habillage (2, 22) placé sur le côté dirigé vers l'habitacle et d'un panneau de porte (3, 23, 25) placé sur le côté extérieur, qui est assemblé au corps principal (1, 21) et à l'habillage (2, 22), caractérisé en ce que les bords périphériques (8 ; 11, 11, 28, 34) du panneau (3, 23, 35) de la porte et du corps principal, (1, 21) ou de l'habillage (2, 22) sont assemblés entre eux par des liaisons démontables, au moins deux bords correspondants (6 ; 11, 25 ; 28) présentant des rainures (9 ; 12, 24 ; 27) situées dans le plan de la porte ou disposées parallèlement à ce plan et qui s'ouvrent l'une vers l'autre, et profilé d'assemblage et d'étanchéité (10, 26, 31, 41) tenace et élastique, capable de compenser les différences de dilatation thermique, étant engagé dans les rainures (9 ; 12, 24 ; 27).

2. Porte de véhicule automobile selon la revendication 1, caractérisée en ce que le profilé (26) présente une section en forme de Z et le panneau (23) de la porte et le corps principal (21) et l'habillage (22) sont placés à des distances d'écartement mutuel qui y correspondent.

3. Porte de véhicule automobile selon la revendication 1 ou 2, caractérisée en ce que le profilé (10) présente une lèvre d'étanchéité, qui émerge entre les bords (6 ; 11) et qui forme joint étanche contre l'encadrement (14) de la baie de porte de la carrosserie.

4. Porte de véhicule automobile selon la revendication 1, 2 ou 3, caractérisée en ce que le profilé (31) présente une lèvre d'étanchéité (32) qui recouvre à joint étanche l'aile (33) du bord (34) du panneau (35) de la porte.

FIG.1

FIG.2

FIG.3

FIG.4